# EUROPEAN PATENT SPECIFICATION

(11) **EP 4 586 037 B1**
(45) Date of publication and mention of the grant of the patent: **09.09.2026**
(21) Application number: 24151358.9
(22) Date of filing: 11.01.2024
(51) Int. Cl.: G05D 1/00

(54) **STEERING AUTOMATED VEHICLES BASED ON TRAJECTORIES DETERMINED FROM FUSED OCCUPANCY GRIDS**
LENKUNG AUTOMATISIERTER FAHRZEUGE AUF BASIS VON AUS FUSIONIERTEN BELEGUNGSGITTERN BESTIMMTEN TRAJEKTORIEN
DIRECTION DE VÉHICULES AUTOMATISÉS SUR LA BASE DE TRAJECTOIRES DÉTERMINÉES À PARTIR DE GRILLES D'OCCUPATION FUSIONNÉES

(43) Date of publication of application: 16.07.2025
(73) Proprietor: embotech AG, 8005 Zürich (CH)
(72) Inventor: HAMPP, Elias Lukas, 8005 Zurich (CH); MAUDERLI, David, 8005 Zurich (CH); HEILMEIER, Alexander, 8005 Zurich (CH); DOMAHIDI, Alexander, 8005 Zürich (CH); LONGO, Stefano, 8005 Zürich (CH)
(74) Representative: E. Blum & Co. AG

(56) References cited:
- DE-B3- 102021 113 651
- US-A1- 2022 083 077

## Description

### TECHNICAL FIELD

The invention relates in general to methods of steering automated vehicles using a set of offboard perception sensors, as well as related computerized systems and computer program products. In particular, it is directed to a method that relies on overlapping occupancy grids obtained from offboard perception sensors such as infrastructure-based Lidars, where subsets of the grids are fused at first processing systems, before being merged at a further processing system. This way, a global occupancy grid is obtained for the designated area, based on which vehicle trajectories are eventually computed.

### BACKGROUND

Self-driving vehicles (also known as autonomous vehicles or driverless vehicles) are vehicles that are capable of traveling with little, or even without, human inputs. Such vehicles use sensors (e.g., lidars, cameras, radars, sonars, GPS, and inertial measurement units) to perceive their surroundings. Likewise, automated vehicles may, in principle, be steered based on signals obtained from offboard sensors (i.e., external sensors, which are not in the vehicle). In both cases, sensory information is used to create a model of the vehicle's surroundings, such that this model can be used to generate a navigation path for the vehicle.

Motion prediction is a necessary part of self-driving applications that employ predictive planning techniques. Steering a vehicle based on perception signals obtained from several offboard sensors requires frequent and multiple computations. I.e., each offboard sensor produces signals that must be interpreted and reconciled with a view to determine and update trajectories for the vehicle and, this, at frequencies that typically are on the order of 5 to 20 hertz. However, a practical problem is to have a secure but affordable computer architecture capable of handling such calculations.

US2022083077A1 aims to improve the quality-in terms of spatial extent and of uncertainty- of the perception of the environment in the case where a plurality of carriers equipped with sensors are travelling through an environment, and the position of which is known at least approximately (in the case of motor vehicles, an estimation of position may be delivered, for example, by a satellite positioning system). This aim is achieved using a collaborative approach, in which the "local" occupancy grids corresponding to the measurements performed by the various carriers are fused into a "global" occupancy grid. When the cells of various local grids cover the same region of the environment, the occupancy probabilities of the corresponding cells of the global grid are computed via Bayesian fusion of the occupancy probabilities of the cells of the local grids. This allows the uncertainty in the state of occupancy of the cells of the local grid to be decreased, by optimally using all the available information. So, the underlying idea is to construct consolidated occupancy grids for a plurality of carriers, each equipped with one respective distance sensor, then to fuse these occupancy grids-which may be qualified "local"- to construct a "global" occupancy grid. For example, the carriers may be motor vehicles being driven over a road network and, optionally, (fixed) infrastructure elements such as traffic lights also equipped with distance sensors.

### SUMMARY

According to a first aspect, the invention is embodied as a computer-implemented method of steering an automated vehicle in a designated area using a set of offboard perception sensors. The method comprises repeatedly executing algorithmic iterations, which are typically executed at an average frequency that is between 5 and 20 hertz, e.g., equal to 10 hertz. Each iteration comprises the following steps. First, sensor data are dispatched to K processing systems, whereby each processing system *k* of the *K* processing systems receives *Nₖ* datasets of the sensor data. The *Nₖ* datasets are obtained from *Nₖ* respective sensors of the set of offboard perception sensors, where *k =* 1 to *K, K* ≥ 2, and *Nₖ* ≥ 2. Next, the *Nₖ* datasets received are processed at each processing system *k* to obtain *Mₖ* occupancy grids corresponding to perceptions from *Mₖ* respective sensors of the offboard perception sensors, respectively, where *Nₖ* ≥ *Mₖ ≥* 1. The *Mₖ* occupancy grids overlap at least partly. Data from the *Mₖ* occupancy grids obtained are then fused, at said each processing system *k*, to form a fused occupancy grid. Overall, *K* fused occupancy grids are formed by the *K* processing systems, respectively. The *K* fused occupancy grids are subsequently forwarded to a further processing system, where they are merged. This way, a global occupancy grid is obtained for the designated area. Eventually, a trajectory is determined for the automated vehicle, based on the global occupancy grid. The determined trajectory is then forwarded to a drive-by-wire (DbW) system of the automated vehicle, with a view to steering the vehicle in accordance with this trajectory.

In the present context, several sensor datasets need to be repeatedly processed, at a high frequency. This translates into high throughput and compute requirements, which are difficult to meet, particularly with a secure computing system. To address this problem, the present systems and methods rely on a scalable architecture, which allows to meet the above requirements, irrespective of the redundancy level desired (the processing systems can be redundant, for safety reasons). Namely, several processing devices are provided to handle sensor datasets from respective, distinct subsets of the perception sensors (e.g., Lidars), so as to allows tractable computations. The processing systems produce occupancy grids which are pre-fused (locally, at the level of the systems), before being merged by a distinct processing system, which relies on distinct (sets of) processors. Performing the prefusion at the level of the processing systems makes it possible to save bandwidth. The trajectories can then be computed (e.g., by the further processing system or one or more other processing systems) according to any known, suitable scheme.

According to the invention, the *Nₖ* datasets (as received at said each iteration by each processing system *k)* are respectively associated with *Nₖ* first timestamps. Each iteration further comprises assigning *K* second timestamps to the *K* fused occupancy grids, where each of the *K* second timestamps is equal to an oldest of the *Nₖ* first timestamps associated with the *Nₖ* datasets as processed at each processing system *k*. Each iteration further comprises assigning a global timestamp to the global occupancy grid, where the global timestamp is obtained as an oldest of the *K* second timestamps. The trajectory is eventually determined in accordance with the global timestamp. The above timestamp assignment scheme provides a remarkably simple way to track the timing of perception measurements and ensure that the trajectory (as calculated downstream) is not based on data that is too old.

In particular, such a timestamp management makes it possible to discard any dataset that is too old from the occupancy grid calculation. That is, in embodiments, processing the *Nₖ* datasets further comprises discarding any of the *Nₖ* datasets that is older than a reference time for the *Nₖ* datasets by more than a predefined time period, where the latter is preferably equal to 150 ms. Thus, *Mₖ* is at most equal to *Nₖ.* The reference time is computed as an average of the *Nₖ* timestamps.

Preferably, each sensor of the offboard perception sensors is a 3D laser scanning Lidar, and each of the *Nₖ* datasets received by each processing system *k* captures a point cloud model of an environment of a respective one of the *Nₖ* sensors.

In embodiments, at the step of processing the *Nₖ* datasets, each of the *Nₖ* datasets is processed at each processing system *k* to determine a first 2D grid, which is defined in a polar coordinate system, and then convert the first 2D grid into a second 2D grid, which is defined in a cartesian coordinate system. The *Mₖ* occupancy grids as eventually obtained at each processing system *k* are obtained as 2D grids having rectangular cells of given dimensions. Moreover, the *K* fused occupancy grids and the global occupancy grid are, each, formed as a 2D grid having rectangular cells of the same given dimensions, where cells of the global occupancy grid coincide with cells of the *K* fused occupancy grids, and cells of the *K* fused occupancy grids themselves coincide with cells of the *Mₖ* occupancy grids as eventually obtained at each of the *K* processing systems. ALidar implementation lends itself well to determining 2D grids in polar coordinate systems. However, such a coordinate system makes it complicated to reconcile overlapping 2D grids. Converting the grids into overlapping Cartesian grids (where some of the cells coincide) makes it easier to subsequently fuse the cell data.

In embodiments, the first 2D grid is determined by determining states of cells thereof, in accordance with hit points captured in the corresponding one of the *Nₖ* datasets, whereby the cells are preferably marked as being in a free state, an occupied state, or an unknown state. That is, instead of relying on usual free and occupied cell states, a third state is defined, which can nevertheless be later refined, e.g., by leveraging the history of the cells, as in embodiments.

Data from the *Mₖ* occupancy grids are preferably fused by: (i) computing, for each cell of each of the *K* fused occupancy grids, a value based on a state of each of the rectangular cells of each grid of the *Mₖ* occupancy grids; and (ii) associating the computed value with said each cell. This value is preferably computed as a count, which is incremented if a corresponding cell of any of the *Mₖ* occupancy grids is in a free state, decremented if a corresponding cell of any of the *Mₖ* occupancy grids is in an occupied state, and left unchanged if a corresponding cell of any of the *Mₖ* occupancy grids is in an unknown state. Preferably, this count is incremented by a unit value if a corresponding cell of any of the *Mₖ* occupancy grids is in a free state, and decremented by a unit value if a corresponding cell of any of the *Mₖ* occupancy grids is in an occupied state. This provides a simple voting system, whereby each sensor votes for 1, - 1, or 0, according to whether the state of a cell is an occupied, unoccupied, or unknown state. This makes it possible to simply fuse information, thereby reducing the amount of data for downstream processing.

In embodiments, each iteration further comprises, after merging the *K* fused occupancy grids: identifying cells of the global occupancy grid that be in the unknown state; and refining states of such cell based on corresponding cell memory values, each reflecting a history of a corresponding cell. The cell memory values are updated at each iteration. Each of the cell memory values is increased, respectively decreased, if the corresponding cell is determined to be in a free state, respectively an occupied state. In addition, the cell value is modified so that its absolute value is decreased if the corresponding cell is determined to be in the unknown state. This allows a simple implementation of a forgetting mechanism. Each of the cell memory values is preferably bounded from above and below. I.e., it is constrained to belong to a given interval.

In embodiments, each iteration further comprises updating a state of the automated vehicle by reconciling states of the automated vehicle as obtained, on the one hand, from the global occupancy grid and, on the other hand, from odometry signals obtained from the automated vehicle. The trajectory is subsequently determined in accordance with the updated state of the automated vehicle.

In embodiments, the method further comprises synchronizing the *K* processing systems and the further processing system according to a networking protocol for clock synchronization.

According to another aspect, the invention is embodied as a computer program product for steering an automated vehicle in a designated area. The computer program product comprises a computer readable storage medium having program instructions embodied therewith, where the program instructions are executable by processing means of a computerized system. The latter comprises a set of offboard perception sensors, *K* processing systems, and a further processing system. In operation, the program instructions cause the computerized system to execute several algorithmic iterations as described above.

According to a final aspect, the invention is embodied as a system for steering an automated vehicle in a designated area. The system comprises a set of offboard perception sensors, *K* processing systems, as well as a further processing system. The system is configured to execute several algorithmic iterations. In operation, each iteration comprises steps as described above, i.e., dispatching sensor data to the *K* processing systems, processing the *Nₖ* datasets at each processing system *k* to obtain *Mₖ* occupancy grids, fusing data from the *Mₖ* occupancy grids at each processing system *k* to form a fused occupancy grid, forwarding the *K* fused occupancy grids to the further processing system (for it to merge the *K* fused occupancy grids and obtain a global occupancy grid), determining a trajectory for the automated vehicle and forwarding the determined trajectory to a DbW system of the automated vehicle. In addition, the *Nₖ* datasets (as received at said each iteration by each processing system *k*) are respectively associated with *Nₖ* first timestamps. Each iteration further comprises assigning *K* second timestamps to the *K* fused occupancy grids, where each of the *K* second timestamps is equal to an oldest of the *Nₖ* first timestamps associated with the *Nₖ* datasets as processed at each processing system *k.* Each iteration further comprises assigning a global timestamp to the global occupancy grid, where the global timestamp is obtained as an oldest of the *K* second timestamps. The trajectory is eventually determined in accordance with the global timestamp.

In embodiments, the system comprises two redundant sets of processing systems, where each of the redundant sets comprises *K* processing systems. Preferably, the number *K* of processing systems in each of the redundant sets is larger than or equal to 4. In that case, the system is further configured to check whether the *Mₖ* occupancy grids obtained by each of the redundant sets match. Redundant processing systems are used to ensure that automated driving functions operate safely and reliably.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 is a diagram schematically illustrating high-level features of the proposed approach, whereby sensor datasets obtained from different Lidars are separately processed at distinct processing systems, pre-fused by such systems, and sent to another processing system for it to merge the fused grids, based on which vehicle trajectories are then obtained, as in embodiments;
FIG. 2 is a flowchart illustrating high-level steps of a method of steering an automated vehicle, according to embodiments;
FIG. 3 is a diagram illustrating overlapping occupancy grids, which are pre-fused by distinct processing systems, before being forwarded to another processing system for it to merge the fused grids, as in embodiments;
FIG. 4 is a table illustrating how use can be made of cell histories to infer states of occluded cells, as in embodiments;
FIG. 5 shows a global 2D occupancy grid generated at a given time point, as in embodiments. In this example, the grid shows a representation of the surroundings of a given automated car (ego vehicle), but it does not embed a representation of this car; and
FIG. 6 schematically represents a top view of an industrial parking lot, where used is made of perception signals obtained from infrastructure-based Lidars to determine (and repeatedly update) a trajectory for an automated car in the parking lot, as in embodiments.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Methods, computerized systems, and computer program products embodying the present invention will now be described, by way of non-limiting examples.

### DETAILED DESCRIPTION OF EMBODIMENTS OF THE INVENTION

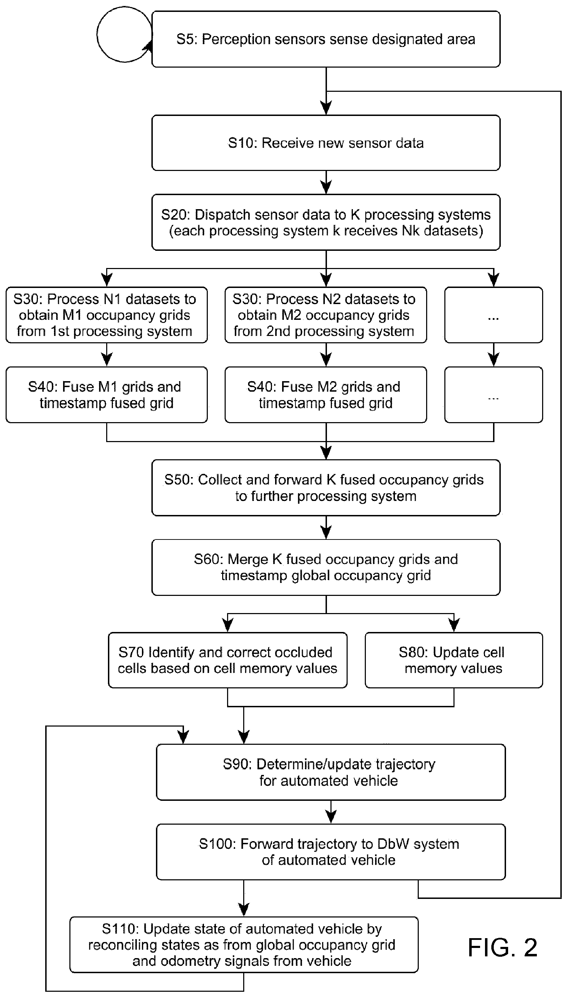

The following description is structured as follows. General embodiments and high-level variants are described in section 1. Section 2 addresses particularly preferred embodiments. Section 3 concerns technical implementation details. Note, the present method and its variants are collectively referred to as the present methods. All references Sn refer to methods steps of the flowcharts of FIG. 2, while numeral references pertain to devices, components, and concepts involved in embodiments of the present invention.

### 1. General embodiments and high-level variants

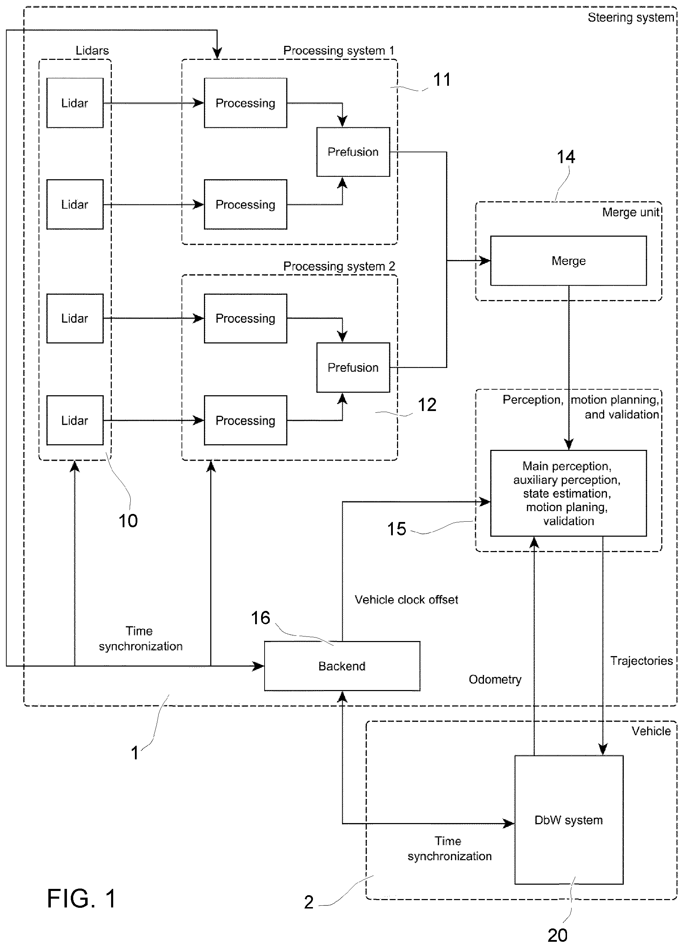

Referring to FIGS. 1, 2, a first aspect of the invention concerns a method of steering an automated vehicle 2 in a designated area 5 (e.g., a car manufacture or an industrial parking lot), using a set 10 of offboard perception sensors 110 - 140. The method is implemented by a system 1, which concerns another aspect of the invention. The system 1 includes a set of *K* processing systems, where *K* ≥ 2, at least one additional processing system (called "further processing system" herein), as well as the set of offboard perception sensors 110 - 140, see FIG. 1.

The vehicle 2 is partly automated, i.e., it includes a drive-by-wire (DbW) system 20, but typically has no sensing capability. That is, the automated vehicle 2 does not necessarily include perception sensors. In typical application scenarios, the vehicle 2 does actually not include any perception sensor at all. In other cases, the vehicle may happen to include such perception sensors. However, the latter are preferably not active, i.e., not used to calculate the trajectories referred to in the present methods. In variants, such sensors may be involved to perform further redundancy checks, in addition to the method steps described below.

Note, the terminologies "autonomous" and "automated" are sometimes used as synonyms. In general, "autonomous", "semi-autonomous", and "partly autonomous", refer to concepts that involve some self-governance of machines that are capable of sensing their environment to safely move therein, avoiding obstacles and collisions with other objects, whether static or in motion. In this document, the terminology "automated" is to be understood as meaning that the automated vehicle incorporates automation to move (e.g., drive); it can automatically drive from one location to another, based on trajectories that are computed offboard and then communicated to the vehicle 2.

That is, in the context of the present document, such trajectories are primarily obtained from offboard (external) sensors 21 - 24, while the vehicle does typically not have (or make use) of sensing capability to sense its environment. However, the automated vehicle 2 is equipped with a DbW system 20, as seen in FIG. 1. As usual, the DbW system 20 includes electromechanical actuators, to allow actuation of the vehicle. E.g., the automated system 20 of the vehicle 2 is capable of taking control of the vehicle for the latter to start, accelerate, brake, steer, and stop, so as to be able to move from one location to another. The vehicle 2 may otherwise have minimal processing capability, if only to manage emergency stops.

The automated vehicle 2 is a ground vehicle, typically an automated car. In principle, such vehicles can be of any type, e.g., cars, vans, transit buses, motorcoaches, trucks, lorries, or any other types of ground vehicles that may benefit from automation. In typical embodiments, though, the present automated vehicles are production cars, vans, electric vehicles, or the likes, which benefit from automatic driving.

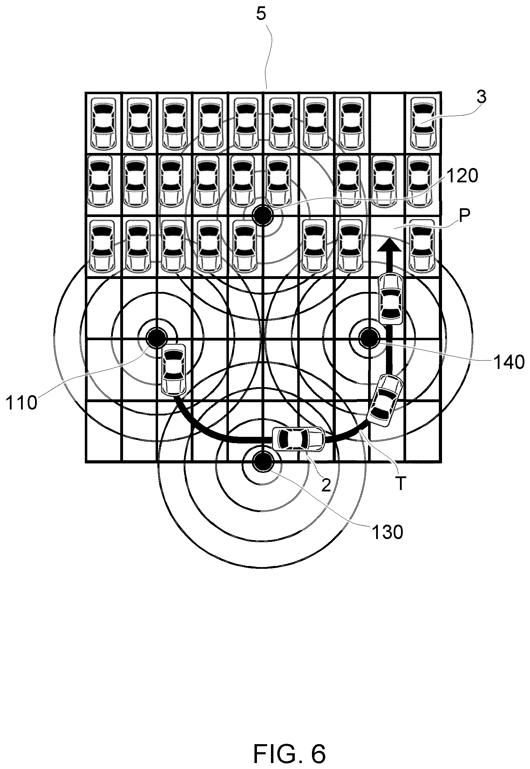

The vehicle 2 can be considered to form part of the system 1, or not. The set of offboard perception sensors 110 - 140 preferably includes Lidars (e.g., 3D laser scanning Lidars). Such perception sensor may advantageously be complemented by other types of sensors, such as cameras, radars, sonars, GPS, and/or inertial measurement units, if only to allow heterogenous redundancy checks, as in preferred embodiments. Such sensors are arranged in a designated area 5 (e.g., a parking lot, as assumed in FIG. 6). The sensors are preferably infrastructure-based sensors, i.e., sensor mounted on given parts of the infrastructure of the area 5. The sensor may be statically arranged in the area 5 of interest. The sensors can, for example, be placed on pylons, poles or on given parts of the existing infrastructure. In variants, the sensors are movable sensors, i.e., sensors configured to move in the area 5. In that case, the sensors can be re-located to meet a specific logistics goal or a specific operation flow.

Various processing systems 11, 12, 14, 15 may form part of a control unit, which is in communication with the perception sensors 110 - 140 and the DbW system 20 of the vehicle 2. I.e., the control unit can send data to, and receive data from, the vehicle 2. To that extent, the control unit occupies a "central position" and can therefore be regarded as a central control unit (CCU), notwithstanding the several processing components 11, 12, 14 it includes.

The proposed method revolves around the repeated execution of algorithmic iterations (or algorithmic cycles), as exemplified in the flow of FIG. 2. Essentially, each iteration comprises dispatching sensor data to processing systems 11, 12 (step S20 in the flow of FIG. 2), processing (step S30) datasets at each processing system 11, 12 to obtain occupancy grids, fusing (step S40) the occupancy grids at each processing system to form fused grids, forwarding (step S50) the fused grids to a further processing system 14, for the latter to merge (S60) the fused occupancy grids and obtain a global occupancy grid, based on which a trajectory is determined (step S90) and forwarded (step S100) to the DbW system 20 of the automated vehicle 2.

In detail, the sensor data are first dispatched S20 to *K* processing systems 11, 12, where *K* ≥ 2. In preferred embodiments, the number of such processing systems is larger than or equal to 4. That is, each processing system *k* of the *K* processing systems (i.e., *k =* 1 to *K*) receives, at each iteration, *Nₖ* datasets of sensor data, where *Nₖ* ≥ 2 ∀ *k.* Such data are obtained (step S5) from *Nₖ* respective sensors of the set 10 of offboard perception sensors 110 - 140.

The *Nₖ* datasets are then processed S30 at each processing system *k* to obtain *Mₖ* occupancy grids. The *Mₖ* grids reflect perceptions from *Mₖ* sensors of the offboard perception sensors 11, respectively. Ideally, *Nₖ* occupancy grids are obtained upon completing step S30, i.e., *Mₖ = Nₖ.* However, in embodiments, some of the *Nₖ* datasets may be discarded, for reasons discussed later. Thus, in general, *Nₖ* ≥ *Mₖ* ≥ 1. In all cases, the *Mₖ* occupancy grids obtained are grids that overlap at least partly in space, for reasons that will become apparent later.

As illustrated in FIG. 1, each processing system *k* fuses S40 data from the *Mₖ* occupancy grids obtained at step S30 to form a fused occupancy grid. That is, *K* fused occupancy grids are formed by the *K* processing systems 11, 12, respectively. Note, the *K* occupancy grids will typically overlap at least partly in space, too. This fusion step S40 can be regarded as a pre-fusion operation, given that the *K* fused occupancy grids are later merged at step S60.

To that aim, the *K* fused occupancy grids are first forwarded S50 to a further processing system 14, which differs from the systems 11, 12. The processing system 14 merges S60 the *K* fused occupancy grids to obtain a global occupancy grid for the designated area 5. The merge operation S60 and the fusion operations S40 are similar operations, which can even be identical, conceptually speaking. Both steps S40, S60 rely on data fusion, and aim at reconciling data obtained from distinct sources, with a view to forming a more complete, consistent, and accurate representation of the designated area 5, or portions thereof.

Once a global occupancy grid has been obtained, the method can proceed to determine (or update) S90 a trajectory for the automated vehicle 2 based on the global occupancy grid, and forward S100 this trajectory to the DbW system 20 of the automated vehicle 2. Steps S90 and S100 can be performed by additional processing systems 15, i.e., systems that are distinct from the system 11, 12, and 14, as assumed in FIG. 1.

Note, updating a trajectory amounts to determining a new trajectory, albeit close to the previous trajectory. Trajectories sent to the DBW system 20 are translated into commands for the electromechanical actuators of the DbW system 20, to allow actuation of the vehicle. I.e., the automated system 20 takes control of the vehicle, which will accordingly start, accelerate, brake, steer, and stop, so as to move from one location to another. Practically speaking, a trajectory can be defined as series of commands for respective actuators (acceleration, steering, and braking) and for successive time points. That is, such commands form a timeseries that embody a trajectory, which is determined in accordance with a goal set in space, or preferably set in both space and time.

The control unit may comprise distinct sets of processors, where each of the sets comprises one or more processors. In particular, the processing systems 11, 12, 14, 15 can advantageously be mapped onto respective ones of the distinct sets of processors. Even, the processing systems 11, 12, 14, 15 are preferably implemented as distinct computers of the control unit. The exact mapping, however, may depend on the security levels offered by the (sets of) processors. In variants, the control unit may be embodied as a single computer, provided that its sets of processors are sufficiently safe. An example of suitable functional safety standard is defined by the ISO26262 standard for the development of electrical and electronic systems in road vehicles.

In the present context, several sensor datasets need to be repeatedly processed, at a high frequency. This translates into high throughput and compute requirements, which are difficult to meet, particularly with a secure computing system. To address this problem, the present systems and methods rely on a scalable architecture, which allows to meet the above requirements, irrespective of the redundancy level desired (the processing systems 11, 12 can be redundant, for safety reasons).

Namely, according to the proposed approach, several processing devices 11, 12 are provided to handle sensor datasets from respective, distinct subsets of the perception sensors (e.g., Lidars), so as to allows tractable computations. The processing systems 11, 12 produce occupancy grids which are pre-fused (locally, at the level of the systems 11, 12), before being merged by a distinct processing system, which relies on distinct (sets of) processors. Performing the prefusion at the level of the processing systems 11, 12 makes it possible to save bandwidth. The trajectories can then be computed (e.g., by the system 14 or one or more other processing systems 15) according to any known, suitable scheme.

Moreover, the *Nₖ* datasets are subjected to a specific timestamping scheme. In practice, the *Nₖ* datasets received at each iteration by each processing system *k* are respectively associated with *Nₖ* first timestamps, corresponding to times at which the sensor measurements were performed. Now, such times may slightly differ, giving rise to time differences that may have to be adequately handled, for security reasons. To that aim, each iteration further comprises assigning *K* second timestamps to the *K* fused occupancy grids (step S40), where each of the *K* second timestamps is conservatively chosen to be equal to the oldest source timestamp. That is, each of the *K* second timestamps is set equal to the oldest of the *Nₖ* first timestamps associated with the *Nₖ* datasets as processed at each processing system *k.*

Similarly, a global timestamp may be assigned (at step S60) to the global occupancy grid eventually obtained at each iteration, where this global timestamp is set equal to the oldest of the *K* second timestamps. Eventually, the trajectory is determined or updated S90 in accordance with the global timestamp as set at step S60. The above timestamp assignment scheme makes it possible to check the temporality of incoming data and its validity for subsequent processing, something that is particularly advantageous in a distributed system such as shown in FIG. 1. In particular, this assignment provides a simple way to track the timing of perception measurements and ensure that the trajectory (as calculated downstream) is not based on data that is too old.

In particular, such a timestamp management makes it possible to discard any dataset that is too old from the occupancy grid calculation at step S30. I.e., the processing step S30 may discard any of the *Nₖ* datasets (as processed by any processing system *k)* that is older than a reference time for the *Nₖ* datasets by more than a predefined time period. This time period can for instance be set equal to 150 ms. As a result, *Mₖ* is at most equal to *Nₖ.* Note, the reference time can be computed as an average of the *Nₖ* timestamps, e.g., using a geometric or arithmetic average. More generally, any suitable definition of the average can be used, e.g., as derived from the generalized mean formula, preferably using an exponent that is larger than or equal to zero. In all cases, any datasets that is older than the average time for the *Nₖ* datasets by more than a predefined time period is preferably discarded to ensure safer trajectory calculations.

As noted earlier, each sensor of the offboard perception sensors 110 - 140 is preferably a 3D laser scanning Lidar. In that case, each of the *Nₖ* datasets received by each processing system *k* captures a point cloud model of an environment of a respective one of the *Nₖ* sensors. For example, each Lidar can be configured to scan its surroundings by scanning rays at flat angles. Such angles are preferably separated by at most one degree of angle in the transverse plane (called elevation plane), i.e., a plane corresponding to a given azimuth, which is transverse to a reference plane of the area 5, e.g., corresponding to the ground level of the area 5. The ground level corresponds to the horizontal plane on which the vehicle rests or drives in the designated area 5. The ground is typically flat or essentially flat. That is, small deformations may be present, e.g., ramps, steps, and/or bumps. The reference plane of the area may typically be an average plane of the ground level or the lowest plane of the ground level.

Preferably, the flat angles span a range of at least 30 degrees of angle in each elevation plane. Each Lidar may for instance allow up to 64 000 points per full rotation. I.e., the rays are 360° scanned around the zenith direction, at a flat elevation angle from the reference plane of the Lidar, parallel to the ground level. For example, each lidar may scan 32 rays distributed between -16° and +15° with respect to a given reference angle. Several Lidars can have different reference angles, depending on how they are arranged across the area 5. That said, the present invention does not depend on a particular Lidar technology.

The Lidar data can be leveraged to populate 2D or 3D occupancy grids. In the present context, it is normally sufficient to rely on 2D grids, which minimizes the amount of data to be handled next. A Lidar implementation lends itself well to determining 2D grids in polar coordinate systems. However, such a coordinate system makes it complicated to reconcile overlapping 2D grids.

Therefore, in embodiments, each of the *Nₖ* datasets is processed S30 (at each processing system *k)* so as to initially determine a first 2D grid, which is defined in a polar coordinate system. This first grid is then converted into a second 2D grid, which is defined in a cartesian coordinate system. I.e., the *Mₖ* occupancy grids as eventually obtained at each processing system *k* are obtained as 2D grids having rectangular cells of given dimensions. Similarly, the resulting *K* fused occupancy grids and the global occupancy grid are, each, formed as a 2D grid having rectangular cells of the same given dimensions. Moreover, such grids are arranged in such a manner that cells of the global occupancy grid coincide with cells of the *K* fused occupancy grids, and cells of the *K* fused occupancy grids themselves coincide with cells of the *Mₖ* occupancy grids as eventually obtained at each of the *K* processing systems 11, 12.

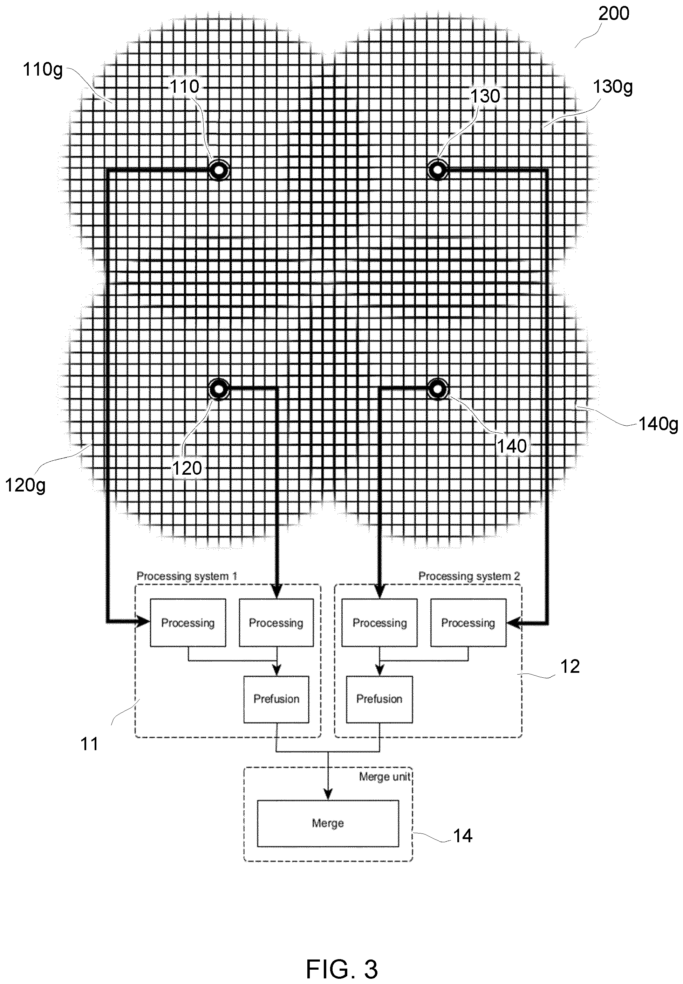

This is illustrated in the simple example of FIG. 3, where grids 110g, 120g are obtained and fused by a first processing system 11, thanks to output data from Lidars 110, 120, while grids 130g, 140g are concurrently obtained and fused by a second processing system 12, thanks to output data from Lidars 130, 140. The fused grids are then merged by a further processing system 14, which results in a global grid 200. Note, all such grids are normally finite (in the 2D space in which they are defined). However, the grids can be defined such that some, at least, of the rectangular cells of the *Mₖ* occupancy grids (as obtained at each processing system *k)* coincide, as illustrated above. As a result, the *Mₖ* occupancy grids overlap at least partly and so do the fused grids.

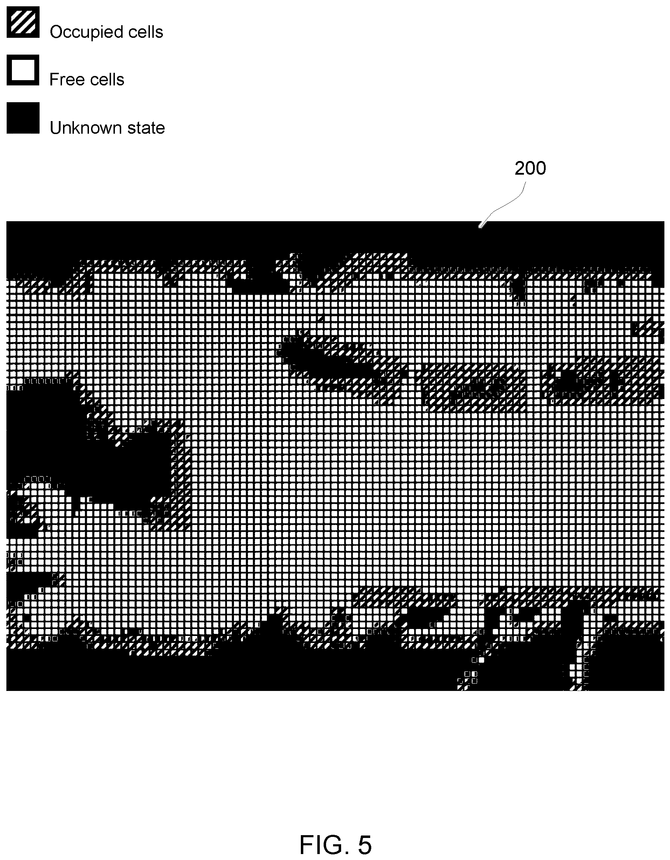

In embodiments, the grids 110g - 140g are determined by determining states of the cells of the grid, in accordance with hit points captured in the datasets received from the Lidars. As illustrated in the more realistic example of grid shown in FIG. 5, the cells are preferably marked as being in a free state, an occupied state, or an unknown state. Sometimes, the actual cell states may be unknown, e.g., because no information is available, due to occlusion. While such cells would normally be assumed to be occupied (by default, for security reasons), an alternative is to consider a further cell state (in addition to the usual free and occupied states), which corresponds to an unknown or undetermined state. It is nevertheless possible to refine the state of unknown cells, by leveraging the history of this cell, as explained below. In the example of FIG. 5, the grid reflects the world representation, i.e., the surroundings of a vehicle of interest. The representation of this vehicle (often referred to as "ego vehicle") is not incorporated in this depiction. Preferably, though, each occupancy grid captures a global representation, which embeds a representation of the vehicle 2 in the world representation.

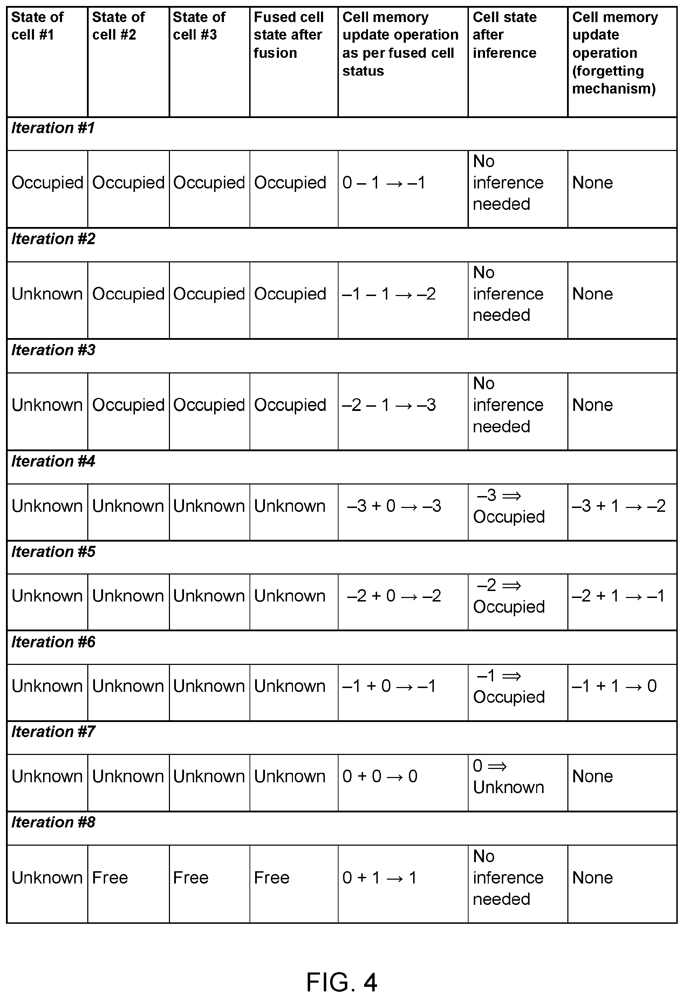

Data from the *Mₖ* occupancy grids can be fused S40 by computing, for each cell of the *K* fused occupancy grids, a value based on a state of each of the rectangular cells of each grid of the *Mₖ* occupancy grids obtained earlier S30. The computed value is then associated with the respective cell. A similar or identical mechanism can be implemented to merge the *K* fused grids. For example, referring to FIG. 4, this value can be computed as a count, which is incremented, decremented, or left unchanged, in accordance with the determined state of the cell. That is, this value is incremented (e.g., by a unit value, or 1) if a corresponding cell of any of the *Mₖ* occupancy grids is in a free state, decremented (e.g., by 1) if a corresponding cell of any of the *Mₖ* occupancy grids is in an occupied state, and left unchanged if a corresponding cell of any of the *Mₖ* occupancy grids is in an unknown state. In other words, the present methods may implement a simple voting system, whereby each Lidar votes for 1, - 1, or 0, according to whether a cell is occupied, unoccupied or unknown. This makes it possible to simply "fuse" information, thereby reducing the amount of data for downstream processing.

Now, after merging the *K* fused occupancy grids, the present methods may advantageously identify S70 cells of the global occupancy grid that be in the unknown state and infer correct states of such cells based on corresponding cell memory values. A cell memory value reflects a history of the corresponding cell. Such cell memory values are updated S80 during each iteration. For example, each of the cell memory values can be increased or decreased, if the corresponding cell is determined to be in the free state or an occupied state, respectively. For completeness, each cell memory value is modified so that its absolute value is decreased if the corresponding cell is determined to be in the unknown state and, this, during each iteration.

Such a scheme is particularly advantageous where occlusion occurs. A grid map is indeed susceptible to brief occlusions, e.g., when the vehicle drives through a gate. Thus, it may be beneficial to introduce a value (the cell memory) that represents the current certainty of the cell state based on the cell history.

A concrete example is now discussed in reference to FIG. 4. In this example, each cell memory value is defined as an integer value. This value is updated so that it is incremented by 1, respectively decremented by 1, if the cell is determined to be in the free state, respectively the occupied state. In addition, the memory cell value is modified so that its absolute value is decremented by 1 if the cell is determined to be in the unknown state. That is, the cell memory value is computed as a count, which is incremented, decremented, or left unchanged, in accordance with the state of the cell as determined last from the perception (the cell memory update is not based on the state that results from the inference made to refine a cell in the unknown state). The endpoints of the safeguard interval consist of integer values of opposite signs. The interval considered can typically be [-10, 10]. Restricting to integer values further simplifies calculations; only integer arithmetic operations are required.

FIG. 4 is a table showing states as determined for three coinciding cells (cell #1, cell #2, and cell #3), in accordance with overlapping perceptions formed from three respective Lidars. I.e., the values of such cells come from distinct Lidar measurements, which yield distinct (albeit overlapping) grids. As the grids partly overlap, at least some of the cells of one grid coincide with cells of one or each of the other two grids, as illustrated in FIG. 3. Such cells are meant to be fused or merged.

During the first iteration (Iteration #1), the state of each of the cells (cell #1, cell #2, and cell #3) is determined to be the occupied state. A majority vote obviously concludes to an occupied state for the fused cell (fourth column). Accordingly, the cell memory value of the fused cell is decreased (fifth column), so that the updated cell memory value is equal to -1. This value is initially set equal to 0; the operation performed reads 0 - 1 → -1, such that the new cell memory value is equal to -1. No inference (sixth column) is needed here as the majority vote unambiguously concludes to an occupied state. For the same reason, no additional update (seventh column) is required, as there is no need to forget the accumulated value.

During the second iteration, the cell states remain the same for cell #2 and cell #3, while the first cell is now determined to be unknown. A majority vote again concludes to an occupied state for the fused cell. The cell memory value is thus decreased again (-1 - 1 → -2). The same observations are made during the third iteration (the cell states remain unchanged), such that the vote concludes to an occupied state. The cell memory value is accordingly decreased (-2 - 1 → -3). However, during each of the next four iterations (Iteration #4 to #7), all cells now happen to be in the unknown state, something that may typically results from a temporary occlusion or a signal alteration. In such cases, the actual state of the fused cell can be inferred to be occupied, based on the history of the cell but only as long as the forgetting mechanism permits.

Practically speaking, use is made of the last known cell memory value (i.e., -3) during the 4^{th} iteration. This value indicates that the state is probably still occupied (-3 ⇒ Occupied). As no new information is available (the state determined last is the unknown state), the cell memory value is decreased toward zero (i.e., -3 + 1 → -2), as a result of the forgetting mechanism. The same repeats over the next two iterations (-2 + 1 → -1, -1 + 1 → 0), until the cell memory value reaches the value zero. From this point on, it can no longer be assumed that the fused cell is occupied, and its state now switches to "unknown" during the 7^{th} iteration. If the next vote (8^{th} iteration) concludes to a free state, however, then the count can be increased again (0 + 1 → 1), and so on. Note, various practical implementations can be contemplated for the above mechanism. In particular, the distinction between the 5th and 7th column is made for the sake of clarity. In practice, however, the cell memory would likely be updated in a single step.

Given the simplicity of the operations required (mere arithmetic operations), the above correction mechanism may possibly be implemented for each grid, i.e., upon completing step S30, upon completing step S40, and after merging S60 the fused grids.

Referring back to FIG. 2, determining trajectories for the vehicle 2 requires knowing the state of the vehicle, as with all motion planning techniques. To achieve this, use can be made of vehicle states inferred from the Lidar measurements. Moreover, the state of the vehicle can be refined thanks to odometry signals obtained from the vehicle, hence the benefit of using both offboard Lidar measurements and odometry signals. Thus, in embodiments, the state of the automated vehicle 2 is updated S110, during each iteration, by reconciling states of the automated vehicle 2 as obtained, on the one hand, from the global occupancy grid and, on the other hand, from odometry signals obtained from the vehicle 2 itself. Thus, the subsequently computed trajectory is determined in accordance with a more consistent state of the vehicle 2.

The trajectories are preferably computed by dedicated processing systems 15, which are preferably distinct from the *K* processing systems 11, 12 and the further processing system 14. The systems 15 may for instance implement a main perception system and an auxiliary perception system, as assumed in FIG. 1, thanks to distinct processing systems (call them primary and auxiliary processing system), which are in communication with each other. That is, the primary processing system is configured to form a main perception based on signals from various types of perception sensors (e.g., involving Lidars and cameras), estimate states of the vehicle based on feedback signals from the DbW system 20, and compute trajectories for the vehicle 2 based on the main perception formed and the estimated states. The auxiliary processing system is configured to form an auxiliary perception based on signals from only a subset of the perception sensors (e.g., only the Lidars), validate the computed trajectories based on the auxiliary perception formed, and cause the control unit to forward the validated trajectories to the DbW system 20.

This way, the vehicle can be remotely steered from the control unit, through the DbW system 20, based on the validated trajectories forwarded by the control unit to the DbW system. All the sensors of the set are used to form the main perception. However, instead of re-using all of the perception sensors to form a full redundancy, only a subset of the sensors are used to form the auxiliary perception that is then used to validate the trajectories. In other words, distinct perceptions are formed from overlapping sets of sensors, whereby one of the perceptions formed is used to validate trajectories obtained from the other. This approach requires less computational efforts, inasmuch as less signals (and therefore less information) are required to form the auxiliary perception. Still, this approach is more likely to allow inconsistencies to be detected, thanks to the heterogeneity of sensor signals used to obtain the main and auxiliary perceptions.

Referring back to FIG. 1, another aspect of the invention concerns the system 1 itself. This system comprises a set 10 of offboard perception sensors 110 - 140, as well as *K* processing systems 11, 12, and a further processing system 14. As noted above, the system 1 can include additional processing systems 15. In addition, the system 1 can be regarded as including the steered vehicle(s), it being noted that the present techniques can be implemented to steer several automated vehicles. In general, the system 1 is configured to execute several algorithmic iterations. In operation, and consistently with the present methods, each iteration comprises performing steps as described earlier, i.e., dispatching sensor data to the *K* processing systems 11, 12, processing datasets at each processing system *k* to obtain occupancy grids, fusing data from such occupancy grids to form fused occupancy grids, and forwarding the fused occupancy grids to the further processing system 14 for it to merge them and obtain a global occupancy grid, based on which a trajectory can be determined and forwarded to the DbW system 20 of the vehicle 2.

As noted earlier, the system preferably comprises redundant sets (e.g., two sets) of processing systems 11, 12, where each set comprises *K* processing systems (e.g., *K* ≥ 4). In that case, the system 1 is further configured to check whether occupancy grids obtained by each of the redundant sets match. Downstream computations carry on as long as the occupancy grids match, else an auxiliary procedure (e.g., an emergency stop) is triggered.

Another, but closely related, aspect of the invention concerns a computer program product. As indicated earlier, this product comprises a computer readable storage medium, which has program instructions embodied therewith. The program instructions can be executed by processing means of a computerized system 1 as described above, to cause the computerized system to execute several algorithmic iterations as described in reference to the present methods.

The above embodiments have been succinctly described in reference to the accompanying drawings and may accommodate a number of variants. Several combinations of the above features may be contemplated. Examples are given in the next section.

### 2. Particularly preferred embodiments

### 2.1 Preferred architecture

As illustrated in FIG. 1, the Lidars communicate with the *K* processing systems 11, 12, which process the sensor output data to decode 2D grids. Such grids are then locally pre-fused at the processing systems 11, 12, before being passed to the processing system 14, which merges all fused grids. Additional processing systems 15 are used to determine trajectories, e.g., based on a main and auxiliary perceptions, where the auxiliary perception is used to validate trajectories computed from the main perception, as explained in section 1. The validated trajectories are then passed to the DbW system 20 of the vehicle 2, to accordingly steer the latter.

All components of the main system 1 must be suitably synchronized. To that aim, the vehicle 2 may communicate with a backend unit 16, which coordinates all subsystems and components. In particular, the *K* processing systems 11, 12 and the further processing system 14 can be synchronized according to a networking protocol for clock synchronization.

### 2.2 Preferred flow

FIG. 2 shows high-level steps of a preferred flow. The sensors (e.g., Lidars, as assumed in the following) continually sense S5 portions of the designated area 5, whereby sensor output data are repeatedly sent to processing units 11, 12 of the system 1. At each algorithmic cycle, the processing units 11, 12 receive S10 new datasets corresponding to sensor output data. Such datasets are dispatched S20 to *K* processing systems. Each processing system *k* (*k =* 1 to *K*) receives *Nₖ* datasets and processes S30 them to obtain *Mₖ* occupancy grids, where 1 ≤ *Nₖ ≤ Mₖ.* As noted in section 1, some of the datasets might be discarded at step S30. E.g., the first system processes *N*₁ datasets to obtain *M*₁ occupancy grids, the second system processes *N*₂ datasets to obtain *M*₂ occupancy grids, etc. Next, each processing system *k* locally fuses the *Mₖ* grids obtained and timestamp them, step S40. Thus, *K* fused occupancy grids are obtained, which are collected and forwarded S50 to a further processing system 14.

The processing system 14 merges S60 the *K* fused occupancy grids to form a global occupancy grid, which is then suitably timestamped at the system 14. Next, the further processing system 14 identifies S70 cells in the "unknown" state (typically occluded cells) and attempts to refine such states based on cell histories, using cell memory values, as explained in section 1. I.e., cell memory values are updated S80 in parallel, based on the cell states determined last, using a forgetting mechanism.

The vehicle trajectory is determined (or updated) at step S90, e.g., using one or more downstream processing systems. The determined trajectory is then forwarded S100 to the DbW system 20 of the vehicle 2, to accordingly steer the latter. The process loops back to step S10, thereby starting a new iteration based on new sensor output data. Such algorithmic iterations are executed at an average frequency that is between 5 and 20 hertz, typically equal to 10 hertz. This requires efficient computations and data transmissions, hence the benefits of the approach of FIGS. 1 and 2. In a parallel loop, the state of the vehicle 2 is updated S110 by reconciling states as obtained from the global occupancy grid and odometry signals from the vehicle. The vehicle state obtained can then be used to determine (or update) S90 a subsequent trajectory.

FIG. 6 illustrates an example of application, where use is made of sensor measurements from Lidars 110 - 140 to plan (and then repeatedly update) a vehicle trajectory T for an automated car 2 and automatically drive this car to a given parking place P in a parking lot 5. Care should be taken not to collide with any obstacle, including other vehicles 3 already parked in the parking lot.

### 2.3. Temporality and timestamp management

A preferred implementation is one in which all sensor measurements are provided with timestamps, which correspond to the sensor measurement times. If several measurements from different sources (e.g., Lidars) are used, the oldest measurement time of all considered inputs is set as a measurement time in the outgoing data. This procedure makes it possible to keep track of the oldest time associated with the information considered at any point in the chain. This way, it is possible to determine the maximum time at which the system must be transferred to a safe state throughout the entire processing chain.

For example, the measurement time of the any point cloud can be sent to each voting system. At the pre-fusion stage, the oldest measurement time is set as an effective measurement time, as described earlier. Since there is no clear definition of a reference time for a grid map, the average of all input measurement times is used to set the reference time for the grid map. Grid maps with a measurement age above 150 ms are discarded in order to avoid fusing obsolete information, something that would invalidate the entire grid map. In the global grid map generator, the same logic is applied as in the pre-fusion.

### 3. Technical implementation details

Computerized devices can be suitably designed for implementing embodiments of the present invention as described herein. In that respect, it can be appreciated that the methods described herein are non-interactive, i.e., automated, although human input may be required in certain cases, e.g., should an anomaly or emergency be detected. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

In the present context, each processing system 11, 12, 14, 15 unit is preferably mapped onto one or more respective sets of processors or, even, one or more respective computers. In particular, the system 15 may typically involve several processors or computers.

A suitable computer will typically include at least one processor and a memory (possibly several memory units) coupled to one or memory controllers. Each processor is a hardware device for executing software. The processor, which may in fact comprise one or more processing units (e.g., processor cores), can be any custom made or commercially available processor, likely subject to some certification.

The memory typically includes a combination of volatile memory elements (e.g., random access memory) and nonvolatile memory elements, e.g., a solid-state device. The software in memory may include one or more separate programs, each of which comprises an ordered listing of executable instructions for implementing logical functions. The software in the memory captures methods described herein in accordance with exemplary embodiments, as well as a suitable operating system (OS). The OS essentially controls the execution of other computer (application) programs and provides scheduling, input-output control, file and data management, memory management, and communication control and related services. It may further control the distribution of tasks to be performed by the processors.

The methods described herein shall typically be in the form of executable program, script, or, more generally, any form of executable instructions.

In exemplary embodiments, each computer further includes a network interface or a transceiver for coupling to a network (not shown). In addition, each computer will typically include one or more input and/or output devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When a computer is in operation, one or more processing units executes software stored within the memory of the computer, to communicate data to and from the memory and/or the storage unit (e.g., a hard drive and/or a solid-state memory), and to generally control operations pursuant to software instruction. The methods described herein and the OS, in whole or in part are read by the processing elements, typically buffered therein, and then executed. When the methods described herein are implemented in software, the methods can be stored on any computer readable medium for use by or in connection with any computer related system or method.

Computer readable program instructions described herein can be downloaded to processing elements from a computer readable storage medium, via a network, for example, the Internet and/or a wireless network. A network adapter card or network interface may receive computer readable program instructions from the network and forwards such instructions for storage in a computer readable storage medium interfaced with the processing means. All computers and processors involved can be synchronized using any suitable protocol (e.g., NTP) or thanks to timeout messages.

Aspects of the present invention are described herein notably with reference to a flowchart and a block diagram. It will be understood that each block, or combinations of blocks, of the flowchart and the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the computerized systems, methods of operating it, and computer program products according to various embodiments of the present invention. Note that each computer-implemented block in the flowchart or the block diagram may represent a module, or a portion of instructions, which comprises executable instructions for implementing the functions or acts specified therein. **In** variants, the functions or acts mentioned in the blocks may occur out of the order specified in the figures. For example, two blocks shown in succession may actually be executed in parallel, concurrently, or still in a reverse order, depending on the functions involved and the algorithm optimization retained. It is also reminded that each block and combinations thereof can be adequately distributed among special purpose hardware components.

## Claims

1. A computer-implemented method of steering an automated vehicle (2) in a designated area (5) using a set (10) of offboard perception sensors (110 - 140), wherein the method comprises repeatedly executing algorithmic iterations and each iteration of the several algorithmic iterations comprises:
dispatching (S20) sensor data to *K* processing systems (11, 12), whereby each processing system *k* of the *K* processing systems receives *Nₖ* datasets of the sensor data as obtained from *Nₖ* respective sensors of the set (10) of offboard perception sensors (110 - 140), where *k =* 1 to *K, K* ≥ 2, and *Nₖ* ≥ 2;
processing (S30), at said each processing system *k,* the *Nₖ* datasets received to obtain *Mₖ* occupancy grids corresponding to perceptions from *Mₖ* respective sensors of the offboard perception sensors, respectively, where *Nₖ* ≥ *Mₖ* ≥ 1 and wherein the *Mₖ* occupancy grids overlap at least partly;
fusing (S40), at said each processing system *k,* data from the *Mₖ* occupancy grids obtained to form a fused occupancy grid, whereby *K* fused occupancy grids are formed by the *K* processing systems (11, 12), respectively;
forwarding (S50) the *K* fused occupancy grids to a further processing system (14); merging (S60), at the further processing system (14), the *K* fused occupancy grids to obtain a global occupancy grid for the designated area (5); and
determining (S90), based on the global occupancy grid, a trajectory for the automated vehicle (2) and forwarding (S100) the determined trajectory to a drive-by-wire (DbW) system (20) of the automated vehicle (2), **characterised in that**
the *Nₖ* datasets received at said each iteration by said each processing system *k* are respectively associated with *Nₖ* first timestamps, and
said each iteration further comprises:
assigning (S40) *K* second timestamps to the *K* fused occupancy grids, where each of the *K* second timestamps is equal to an oldest of the *Nₖ* first timestamps associated with the *Nₖ* datasets as processed at said each processing system *k*; and
assigning (S60) a global timestamp to the global occupancy grid, where the global timestamp is obtained as an oldest of the *K* second timestamps, and said trajectory is determined (S90) in accordance with the global timestamp.

2. The method according to claim **1,** wherein
processing (S30) the *Nₖ* datasets at said each processing system *k* further comprises discarding any of the *Nₖ* datasets that is older than a reference time for the *Nₖ* datasets by more than a predefined time period, the latter preferably equal to 150 ms, whereby *Mₖ* is at most equal to *Nₖ,* and
the reference time is computed as an average of the *Nₖ* timestamps.

3. The method according to claim **1** or **2,** wherein
each sensor of the offboard perception sensors (110 - 140) is a 3D laser scanning Lidar, and
each of the *Nₖ* datasets received by said each processing system *k* captures a point cloud model of an environment of a respective one of the *Nₖ* sensors.

4. The method according to claim **3,** wherein, at processing the *Nₖ* datasets,
each of the *Nₖ* datasets is processed (S30) at said each processing system *k* to determine a first 2D grid, defined in a polar coordinate system, and then convert the first 2D grid into a second 2D grid, defined in a cartesian coordinate system, whereby
the *Mₖ* occupancy grids as eventually obtained at said each processing system *k* are obtained as 2D grids having rectangular cells of given dimensions, and
the *K* fused occupancy grids and the global occupancy grid are, each, formed as a 2D grid having rectangular cells of the same given dimensions, wherein cells of the global occupancy grid coincide with cells of the *K* fused occupancy grids, and cells of the *K* fused occupancy grids themselves coincide with cells of the *Mₖ* occupancy grids as eventually obtained at each of the *K* processing systems (11, 12).

5. The method according to claim **4,** wherein
the first 2D grid is determined by determining states of cells thereof, in accordance with hit points captured in the corresponding one of the *Nₖ* datasets.

6. The method according to claim **5,** wherein
determining the states of the cells causes the cells to be marked as being in a free state, an occupied state, or an unknown state.

7. The method according to claim **4, 5** or **6,** wherein data from the *Mₖ* occupancy grids obtained are fused (S40) by
computing, for each cell of each of the *K* fused occupancy grids, a value based on a state of each of the rectangular cells of each grid of the *Mₖ* occupancy grids obtained, and
associating the computed value with said each cell.

8. The method according to claim **7,** wherein
said value is computed as a count, which is incremented if a corresponding cell of any of the *Mₖ* occupancy grids is in a free state, decremented if a corresponding cell of any of the *Mₖ* occupancy grids is in an occupied state, and left unchanged if a corresponding cell of any of the *Mₖ* occupancy grids is in an unknown state, and,
preferably, said count is incremented by a unit value if a corresponding cell of any of the *Mₖ* occupancy grids is in a free state, and decremented by a unit value if a corresponding cell of any of the *Mₖ* occupancy grids is in an occupied state.

9. The method according to claim **8,** wherein said each iteration further comprises, after merging the *K* fused occupancy grids,
identifying (S70) cells of the global occupancy grid that be in the unknown state and refining states of such cell based on corresponding cell memory values, each reflecting a history of a corresponding cell, and
updating (S80) the cell memory values, whereby each of the cell memory values
is increased, respectively decreased, if the corresponding cell is determined to be in the free state, respectively the occupied state, and
is modified so that its absolute value is decreased if the corresponding cell is determined to be in the unknown state.

10. The method according to any one of claims **1** to **9,** wherein said each iteration further comprises
updating (S110) a state of the automated vehicle (2) by reconciling states of the automated vehicle (2) as obtained from, on the one hand, the global occupancy grid and, on the other hand, odometry signals obtained from the automated vehicle (2), whereby said trajectory is subsequently determined in accordance with the updated state of the automated vehicle (2).

11. The method according to claim **10,** wherein
the method further comprises synchronizing the *K* processing systems (11, 12) and the further processing system (14) according to a networking protocol for clock synchronization.

12. The method according to any one of claims **1** to **11,** wherein
said several algorithmic iterations are executed at an average frequency that is between 5 and 20 hertz, preferably equal to 10 hertz.

13. A computer program product for steering an automated vehicle (2) in a designated area (5), the computer program product comprising a computer readable storage medium having program instructions embodied therewith, the program instructions executable by processing means of a computerized system, which comprises a set (10) of offboard perception sensors (110 - 140), *K* processing systems (11, 12), and a further processing system (14), to cause the computerized system to execute several algorithmic iterations, each comprising:
dispatching sensor data to the *K* processing systems (11, 12), whereby each processing system *k* of the *K* processing systems receives *Nₖ* datasets of the sensor data as obtained from *Nₖ* respective sensors of the set (10) of offboard perception sensors (110 - 140), where *k =* 1 to *K, K* ≥ 2, and *Nₖ* ≥ 2;
processing, at said each processing system *k,* the *Nₖ* datasets received to obtain *Mₖ* occupancy grids corresponding to perceptions from *Mₖ* respective sensors of the offboard perception sensors, respectively, where *Nₖ* ≥ *Mₖ* ≥ 1 and wherein the *Mₖ* occupancy grids overlap at least partly;
fusing, at said each processing system *k,* data from the *Mₖ* occupancy grids obtained to form a fused occupancy grid, whereby *K* fused occupancy grids are formed by the *K* processing systems (11, 12), respectively;
forwarding the *K* fused occupancy grids to the further processing system (14); merging, at the further processing system (14), the *K* fused occupancy grids to obtain a global occupancy grid for the designated area (5); and
determining, based on the global occupancy grid, a trajectory for the automated vehicle (2) and forwarding the determined trajectory to a drive-by-wire (DbW) system (20) of the automated vehicle (2),
wherein
the *Nₖ* datasets received at said each iteration by said each processing system *k* are respectively associated with *Nₖ* first timestamps, and
said each iteration further comprises:
assigning (S40) *K* second timestamps to the *K* fused occupancy grids, where each of the *K* second timestamps is equal to an oldest of the *Nₖ* first timestamps associated with the *Nₖ* datasets as processed at said each processing system *k;* and
assigning (S60) a global timestamp to the global occupancy grid, where the global timestamp is obtained as an oldest of the *K* second timestamps, and
said trajectory is determined (S90) in accordance with the global timestamp.

14. A system for steering an automated vehicle (2) in a designated area (5), wherein
the system comprises a set (10) of offboard perception sensors (110 - 140), *K* processing systems (11, 12), and a further processing system (14), and
the system is configured to execute several algorithmic iterations, wherein each iteration of the several algorithmic iterations comprises:
dispatching sensor data to the *K* processing systems (11, 12), whereby each processing system *k* of the *K* processing systems receives *Nₖ* datasets of the sensor data as obtained from *Nₖ* respective sensors of the set (10) of offboard perception sensors (110 - 140), where *k =* 1 to *K, K* ≥ 2, and *Nₖ* ≥ 2;
processing, at said each processing system *k,* the *Nₖ* datasets received to obtain *Mₖ* occupancy grids corresponding to perceptions from *Mₖ* respective sensors of the offboard perception sensors, respectively, where *Nₖ* ≥ *Mₖ* ≥ 1 and wherein the *Mₖ* occupancy grids overlap at least partly;
fusing, at said each processing system *k,* data from the *Mₖ* occupancy grids obtained to form a fused occupancy grid, whereby *K* fused occupancy grids are formed by the *K* processing systems (11, 12), respectively;
forwarding the *K* fused occupancy grids to the further processing system (14); merging, at the further processing system (14), the *K* fused occupancy grids to obtain a global occupancy grid for the designated area (5); and
determining, based on the global occupancy grid, a trajectory for the automated vehicle (2) and forwarding the determined trajectory to a drive-by-wire (DbW) system (20) of the automated vehicle (2),
wherein, in operation,
the *Nₖ* datasets received at said each iteration by said each processing system *k* are respectively associated with *Nₖ* first timestamps, and
said each iteration further comprises:
assigning (S40) *K* second timestamps to the *K* fused occupancy grids, where each of the *K* second timestamps is equal to an oldest of the *Nₖ* first timestamps associated with the *Nₖ* datasets as processed at said each processing system *k*; and
assigning (S60) a global timestamp to the global occupancy grid, where the global timestamp is obtained as an oldest of the *K* second timestamps, and
said trajectory is determined (S90) in accordance with the global timestamp..

15. The system according to claim **14,** wherein
the system comprises two redundant sets of processing systems (11, 12), where each of the redundant sets comprises *K* processing systems, wherein, preferably, *K* ≥ 4, and
the system is further configured to check whether the *Mₖ* occupancy grids obtained by each of the redundant sets match.

## Patentansprüche

1. Ein computerimplementiertes Verfahren zum Steuern eines automatisierten Fahrzeugs (2) in einem festgelegten Bereich (5) unter Verwendung eines Satzes (10) von externen Wahrnehmungssensoren (110 3 140), wobei das Verfahren das wiederholte Ausführen algorithmischer Iterationen umfasst und jede der mehreren algorithmischen Iterationen Folgendes umfasst:
das Weiterleiten (S20) von Sensordaten an *K* Verarbeitungssysteme (11, 12), wobei jedes Verarbeitungssystem *k* der *K* Verarbeitungssysteme *Nₖ* Datensätze der Sensordaten empfängt, die von *Nₖ* jeweiligen Sensoren des Satzes (10) von externen Wahrnehmungssensoren (110 3 140) erfasst wurden, wobei *k* = 1 bis *K*, *K* g 2 und *Nₖ* g 2;
Verarbeiten (S30) der empfangenen *Nₖ* Datensätze in jedem Verarbeitungssystem *k*, um *Mₖ* Belegungsgitter zu erhalten, die jeweils den Wahrnehmungen von *Mₖ* entsprechenden Sensoren der externen Wahrnehmungssensoren entsprechen, wobei *Nₖ* g *Mₖ* g 1 gilt und sich die *Mₖ* Belegungsgitter zumindest teilweise überlappen;
Zusammenführen (S40) der Daten aus den *Mₖ* ermittelten Belegungsgitter in jedem Verarbeitungssystem *k*, um ein zusammengeführtes Belegungsgitter zu bilden, wodurch von den *K* Verarbeitungssystemen (11, 12) jeweils *K* zusammengeführte Belegungsgitter gebildet werden;
Weiterleiten (S50) der *K* zusammengeführten Belegungsgitter an ein weiteres Verarbeitungssystem (14); Zusammenführen (S60) der *K* zusammengeführten Belegungsgitter im weiteren Verarbeitungssystem (14), um ein globales Belegungsgitter für den vorgesehenen Bereich (5) zu erhalten; und
Ermitteln (S90) einer Fahrbahn für das automatisierte Fahrzeug (2) auf der Grundlage des globalen Belegungsgitters und Weiterleiten (S100) der ermittelten Fahrbahn an ein Drive-by-Wire-System (DbW) (20) des automatisierten Fahrzeugs (2),
**dadurch gekennzeichnet, dass**
die *Nₖ* Datensätze, die bei jeder Iteration von jedem Verarbeitungssystem *k* empfangen werden, jeweils mit *Nₖ* ersten Zeitstempeln verknüpft sind, und
jede Iteration weiter umfasst:
Zuweisen (S40) von *K* zweiten Zeitstempeln zu den *K* zusammengeführten Belegungsgittern, wobei jeder der *K* zweiten Zeitstempel dem ältesten der *Nₖ* ersten Zeitstempel entspricht, die den *Nₖ* Datensätzen zugeordnet sind, wie sie in jedem Verarbeitungssystem *k* verarbeitet wurden; und
Zuweisen (S60) eines globalen Zeitstempels an das globale Belegungsgitter, wobei der globale Zeitstempel als der älteste der *K* zweiten Zeitstempel ermittelt wird, und
wobei die Fahrbahn (S90) gemäss dem globalen Zeitstempel bestimmt wird.

2. Das Verfahren nach Anspruch **1**, wobei
das Verarbeiten (S30) der *Nₖ* Datensätze in jedem Verarbeitungssystem *k* weiter das Verwerfen eines beliebigen der *Nₖ* Datensätze umfasst, der um mehr als einen vordefinierten Zeitraum 3 der vorzugsweise 150 ms beträgt 3 älter ist als eine Referenzzeit für die *Nₖ* Datensätze, wobei *Mₖ* höchstens gleich *Nₖ* ist, und
der Referenzzeitpunkt als Mittelwert der *Nₖ* Zeitstempel berechnet wird.

3. Das Verfahren nach Anspruch **1** oder **2**, wobei
jeder Sensor der externen Wahrnehmungssensoren (110 3 140) ein 3D-Laserscanning-Lidar ist und
jeder der *Nₖ* Datensätze, die von dem jeweiligen Verarbeitungssystem *k* empfangen werden, ein Punktwolkenmodell einer Umgebung eines jeweiligen der *Nₖ* Sensoren erfasst.

4. Das Verfahren nach Anspruch **3**, wobei bei der Verarbeitung der *Nₖ* Datensätze
jeder der *Nₖ* Datensätze in dem jeweiligen Verarbeitungssystem *k* verarbeitet wird (S30), um ein erstes 2D-Gitter zu bestimmen, das in einem Polarkoordinatensystem definiert ist, und anschliessend das erste 2D-Gitter in ein zweites 2D-Gitter umgewandelt wird, das in einem kartesischen Koordinatensystem definiert ist, wodurch
die *Mₖ* Belegungsgitter, wie sie schliesslich an jedem der genannten Verarbeitungssysteme *k* erhalten werden, als 2D-Gitter mit rechteckigen Zellen vorgegebener Abmessungen erhalten werden, und
die *K* zusammengeführten Belegungsgitter und das globale Belegungsgitter jeweils als 2D-Gitter mit rechteckigen Zellen derselben vorgegebenen Abmessungen gebildet werden, wobei Zellen des globalen Belegungsgitters mit Zellen der *K* zusammengeführten Belegungsgitter übereinstimmen und Zellen der *K* zusammengeführten Belegungsgitter selbst mit Zellen der *Mₖ* Belegungsgitter übereinstimmen, wie sie schliesslich an jedem der *K* Verarbeitungssysteme (11, 12) erhalten werden.

5. Das Verfahren nach Anspruch **4**, wobei
das erste 2D-Gitter durch Bestimmung der Zustände seiner Zellen gemäss den in dem entsprechenden der *Nₖ* Datensätze erfassten Treffpunkten ermittelt wird.

6. Das Verfahren nach Anspruch **5**, wobei
das Bestimmen der Zustände der Zellen dazu führt, dass die Zellen als in einem freien Zustand, einem belegten Zustand oder einem unbekannten Zustand befindlich markiert werden.

7. Das Verfahren nach Anspruch **4**, **5** oder **6**, wobei Daten aus den erhaltenen *Mₖ* Belegungsgittern zusammengeführt werden (S40), indem
für jede Zelle jedes der *K* zusammengeführten Belegungsgitter ein Wert berechnet wird, der auf einem Zustand jeder der rechteckigen Zellen jedes Gitters der *Mₖ* erhaltenen Belegungsgitter basiert, und
den berechneten Wert jeder dieser Zelle zugeordnet wird.

8. Das Verfahren nach Anspruch **7**, wobei
der Wert als Zählwert berechnet wird, und erhöht wird, wenn sich eine entsprechende Zelle eines der *Mₖ* Belegungsgitter in einem freien Zustand befindet, und verringert wird, wenn sich eine entsprechende Zelle eines der *Mₖ* Belegungsgitter in einem belegten Zustand befindet, und unverändert bleibt, wenn sich eine entsprechende Zelle eines der *Mₖ* Belegungsgitter in einem unbekannten Zustand befindet, und,
vorzugsweise der Zählwert um einen Einheitswert erhöht wird, wenn sich eine entsprechende Zelle eines der *Mₖ* Belegungsgitter in einem freien Zustand befindet, und um einen Einheitswert verringert, wenn sich eine entsprechende Zelle eines der *Mₖ* Belegungsgitter in einem belegten Zustand befindet.

9. Das Verfahren nach Anspruch **8**, wobei jede Iteration nach dem Zusammenführen der *K* zusammengeführten Belegungsgitter weiter umfasst:
das Identifizieren (S70) von Zellen des globalen Belegungsgitters, die sich im unbekannten Zustand befinden, und das Verfeinern der Zustände dieser Zellen auf der Grundlage entsprechender Zellspeicherwerte, von denen jeder eine Historie einer entsprechenden Zelle widerspiegelt, sowie
Aktualisieren (S80) der Zellspeicherwerte, wobei jeder der Zellspeicherwerte
erhöht bzw. verringert wird, wenn festgestellt wird, dass sich die entsprechende Zelle im freien Zustand bzw. im belegten Zustand befindet, und
so modifiziert wird, dass sein Absolutwert verringert wird, wenn festgestellt wird, dass sich die entsprechende Zelle im unbekannten Zustand befindet.

10. Das Verfahren nach einem der Ansprüche **1** bis **9**, wobei jede Iteration weiter umfasst
Aktualisieren (S110) eines Zustands des automatisierten Fahrzeugs (2) durch Abgleichen der Zustände des automatisierten Fahrzeugs (2), wie sie einerseits aus dem globalen Belegungsgitter und andererseits aus Odometriesignalen des automatisierten Fahrzeugs (2) gewonnen wurden, wobei die Fahrbahn anschliessend gemäss dem aktualisierten Zustand des automatisierten Fahrzeugs (2) bestimmt wird.

11. Das Verfahren nach Anspruch **10**, wobei
das Verfahren weiter das Synchronisieren der *K* Verarbeitungssysteme (11, 12) und des weiteren Verarbeitungssystems (14) gemäss einem Netzwerkprotokoll zur Taktsynchronisation umfasst.

12. Das Verfahren nach einem der Ansprüche **1** bis **11**, wobei
die mehreren algorithmischen Iterationen mit einer durchschnittlichen Frequenz ausgeführt werden, die zwischen 5 und 20 Hertz liegt, vorzugsweise 10 Hertz beträgt.

13. Ein Computerprogrammprodukt zum Steuern eines automatisierten Fahrzeugs (2) in einem festgelegten Bereich (5), wobei das Computerprogrammprodukt ein computerlesbares Speichermedium umfasst, auf dem Programmanweisungen gespeichert sind, wobei die Programmanweisungen durch Verarbeitungsmittel eines computergestützten Systems ausführbar sind, das eine Gruppe (10) von externen Wahrnehmungssensoren (110 3 140), *K* Verarbeitungssysteme (11, 12) und ein weiteres Verarbeitungssystem (14) umfasst, um das computergestützte System dazu zu veranlassen, mehrere algorithmische Iterationen auszuführen, von denen jede Folgendes umfasst:
Weiterleiten von Sensordaten an die *K* Verarbeitungssysteme (11, 12), wobei jedes Verarbeitungssystem *k* der *K* Verarbeitungssysteme *Nₖ* Datensätze der Sensordaten empfängt, die von *Nₖ* jeweiligen Sensoren des Satzes (10) von externen Wahrnehmungssensoren (110 3 140) erfasst wurden, wobei *k* = 1 bis *K*, *K* g 2 und *Nₖ* g 2;
Verarbeiten der *Nₖ* empfangenen Datensätze in jedem Verarbeitungssystem *k*, um *Mₖ* Belegungsgitter zu erhalten, die jeweils den Wahrnehmungen von *Mₖ* entsprechenden Sensoren der externen Wahrnehmungssensoren entsprechen, wobei *Nₖ* ≥ *Mₖ*≥ 1 gilt und sich die *Mₖ* Belegungsgitter zumindest teilweise überlappen;
Zusammenführen der Daten aus den *Mₖ* ermittelten Belegungsgittern in jedem der Verarbeitungssysteme *k*, um ein zusammengeführtes Belegungsgitter zu bilden, wodurch von den *K* Verarbeitungssystemen (11, 12) jeweils *K* zusammengeführte Belegungsgitter gebildet werden;
Weiterleiten der *K* zusammengeführten Belegungsgitter an das weitere Verarbeitungssystem (14); Zusammenführen der *K* zusammengeführten Belegungsgitter im weiteren Verarbeitungssystem (14), um ein globales Belegungsgitter für den vorgesehenen Bereich (5) zu erhalten; und
Ermitteln einer Fahrbahn für das automatisierte Fahrzeug (2) auf der Grundlage des globalen Belegungsgitters und Weiterleiten der ermittelten Fahrbahn an ein Drive-by-Wire-System (DbW) (20) des automatisierten Fahrzeugs (2),
wobei
die *Nₖ* Datensätze, die bei jeder Iteration von jedem Verarbeitungssystem *k* empfangen werden, jeweils mit *Nₖ* ersten Zeitstempeln verknüpft sind, und
wobei jede Iteration weiter umfasst:
Zuweisen (S40) von *K* zweiten Zeitstempeln zu den *K* zusammengeführten Belegungsgittern, wobei jeder der *K* zweiten Zeitstempel dem ältesten der *Nₖ* ersten Zeitstempel entspricht, die den *Nₖ* Datensätzen zugeordnet sind, wie sie in jedem Verarbeitungssystem *k* verarbeitet wurden; und
Zuweisen (S60) eines globalen Zeitstempels an das globale Belegungsgitter, wobei der globale Zeitstempel als der älteste der *K* zweiten Zeitstempel ermittelt wird, und
wobei die Trajektorie (S90) gemäss dem globalen Zeitstempel bestimmt wird.

14. Ein System zum Steuern eines automatisierten Fahrzeugs (2) in einem festgelegten Bereich (5), wobei
das System eine Gruppe (10) von externen Wahrnehmungssensoren (110 3 140), *K* Verarbeitungssysteme (11, 12) und ein weiteres Verarbeitungssystem (14) umfasst, und
das System so konfiguriert ist, dass es mehrere algorithmische Iterationen ausführt, wobei jede der mehreren algorithmischen Iterationen Folgendes umfasst:
Weiterleiten von Sensordaten an die *K* Verarbeitungssysteme (11, 12), wobei jedes Verarbeitungssystem *k* der *K* Verarbeitungssysteme *Nₖ* Datensätze der Sensordaten empfängt, die von *Nₖ* jeweiligen Sensoren der Gruppe (10) von externen Wahrnehmungssensoren (110 3 140) erfasst wurden, wobei *k* = 1 bis *K*, *K* g 2 und *Nₖ* g 2;
Verarbeiten der empfangenen *Nₖ* Datensätze in jedem Verarbeitungssystem *k*, um *Mₖ* Belegungsgitter zu erhalten, die jeweils den Wahrnehmungen von *Mₖ* entsprechenden Sensoren der externen Wahrnehmungssensoren entsprechen, wobei *Nₖ* g *Mₖ* g 1 gilt und sich die *Mₖ* Belegungsgitter zumindest teilweise überlappen;
Zusammenführen der Daten aus den *Mₖ* ermittelten Belegungsgittern in jedem der Verarbeitungssysteme *k*, um ein zusammengeführtes Belegungsgitter zu bilden, wodurch von den *K* Verarbeitungssystemen (11, 12) jeweils *K* zusammengeführte Belegungsgitter gebildet werden;
Weiterleiten der *K* zusammengeführten Belegungsgitter an das weitere Verarbeitungssystem (14); Zusammenführen der *K* zusammengeführten Belegungsgitter im weiteren Verarbeitungssystem (14), um ein globales Belegungsgitter für den vorgesehenen Bereich (5) zu erhalten; und
Ermitteln einer Fahrbahn für das automatisierte Fahrzeug (2) auf der Grundlage des globalen Belegungsgitters und Weiterleiten der ermittelten Fahrbahn an ein Drive-by-Wire-System (DbW) (20) des automatisierten Fahrzeugs (2),
wobei im Betrieb
die *Nₖ* Datensätze, die bei jeder Iteration von jedem Verarbeitungssystem *k* empfangen werden, jeweils mit *Nₖ* ersten Zeitstempeln verknüpft sind, und
jede Iteration weiter umfasst:
Zuweisen (S40) von *K* Sekundenzeitstempeln zu den *K* zusammengeführten Belegungsgittern, wobei jeder der *K* Sekundenzeitstempel dem ältesten der *Nₖ* ersten Zeitstempel entspricht, die den *Nₖ* Datensätzen zugeordnet sind, wie sie in dem jeweiligen Verarbeitungssystem *k* verarbeitet wurden; und
Zuweisen (S60) eines globalen Zeitstempels zum globalen Belegungsgitter, wobei der globale Zeitstempel als der älteste der *K* zweiten Zeitstempel ermittelt wird, und
wobei die Trajektorie (S90) gemäss dem globalen Zeitstempel bestimmt wird.

15. Das System nach Anspruch **14**, wobei
das System zwei redundante Sätze von Verarbeitungssystemen (11, 12) umfasst, wobei jeder der redundanten Sätze *K* Verarbeitungssysteme umfasst, wobei vorzugsweise *K* g 4 gilt, und
das System weiter so konfiguriert ist, dass es prüft, ob die von jedem der redundanten Sätze ermittelten *Mₖ* Belegungsgitter übereinstimmen.

## Revendications

1. Procédé mis en Suvre par ordinateur pour la commande d'un véhicule automatisé (2) dans une zone désignée (5) à l9aide d9un ensemble (10) de capteurs de perception externes (110 3 140), dans lequel le procédé comprend l9exécution répétée d9itérations algorithmiques et chaque itération de la pluralité des itérations algorithmiques comprend :
l9envoi (S20) de données de capteurs à *K* systèmes de traitement (11, 12), moyennant quoi chaque système de traitement *k* des *K* systèmes de traitement reçoit *Nₖ* ensembles de données de capteurs telles qu9obtenues de *Nₖ* capteurs respectifs de l'ensemble (10) de capteurs de perception externes (110 3 140), où *k* = 1 à *K, K* g 2 et *Nₖ* g 2 ;
le traitement (S30), au niveau de chacun desdits systèmes de traitement *k,* des *Nₖ* ensembles de données reçus afin d9obtenir *Mₖ* grilles d9occupation correspondant respectivement à des perceptions provenant de *Mₖ* capteurs respectifs des capteurs de perception externes, où *Nₖ* g *Mₖ* g 1 et où les *Mₖ* grilles d9occupation se chevauchent au moins partiellement ;
la fusion (S40), au niveau de chaque système de traitement *k,* des données issues des *Mₖ* grilles d9occupation obtenues afin de former une grille d9occupation fusionnée, moyennant quoi *K* grilles d9occupation fusionnées sont formées par les *K* systèmes de traitement (11, 12), respectivement ;
le transfert (S50) des *K* grilles d9occupation fusionnées à un système de traitement supplémentaire (14) ;
le fusionnement (S60), au niveau du système de traitement supplémentaire (14), des *K* grilles d9occupation fusionnées afin d9obtenir une grille d9occupation globale pour la zone désignée (5) ; et
la détermination (S90), sur la base de la grille d9occupation globale, d9une trajectoire pour le véhicule automatisé (2) et le transfert (S100) de la trajectoire déterminée à un système (20) de commande électronique (DbW) du véhicule automatisé (2),
**caractérisé en ce que**
les *Nₖ* ensembles de données reçus à chacune desdites itérations par chacun desdits systèmes de traitement *k* sont respectivement associés à *Nₖ* premiers horodatages, et
chaque itération comprend en outre :
l9attribution (S40) de *K* deuxièmes horodatages aux *K* grilles d9occupation fusionnées, chacun des *K* deuxièmes horodatages étant égal au plus ancien des *Nₖ* premiers horodatages associés aux *Nₖ* ensembles de données tels qu9ils ont été traités au niveau de chacun desdits systèmes de traitement *k* ; et
l9attribution (S60) d9un horodatage global à la grille d9occupation globale, l9horodatage global étant obtenu comme étant le plus ancien des *K* deuxièmes horodatages, et
ladite trajectoire est déterminée (S90) en fonction de l9horodatage global.

2. Procédé selon la revendication **1**, dans lequel
le traitement (S30) des *Nₖ* ensembles de données au niveau de chaque système de traitement *k* comprend en outre le rejet de tout ensemble de données des *Nₖ* ensembles de données qui est plus ancien qu9un temps de référence pour les *Nₖ* ensembles de données de plus d9une période de temps prédéfinie, cette dernière étant de préférence égale à 150 ms, de sorte que *Mₖ* est au plus égal à *N_{k,}* et
le temps de référence est calculé comme une moyenne des *Nₖ* horodatages.

3. Procédé selon la revendication **1** ou **2**, dans lequel
chaque capteur des capteurs de perception externes (110 à 140) est un lidar à balayage laser 3D, et
chacun des *Nₖ* ensembles de données reçus par ledit système de traitement *k* capture un modèle de nuage de points d9un environnement d9un des *Nₖ* capteurs respectifs.

4. Procédé selon la revendication **3**, dans lequel, lors du traitement des *Nₖ* ensembles de données,
chacun des *Nₖ* ensembles de données est traité (S30) au niveau de chaque système de traitement *k* afin de déterminer une première grille 2D, définie dans un système de coordonnées polaires, puis de convertir cette première grille 2D en une deuxième grille 2D, définie dans un système de coordonnées cartésiennes, de sorte que
les *Mₖ* grilles d9occupation finalement obtenues au niveau de chaque système de traitement *k* sont obtenues sous la forme de grilles 2D comportant des cellules rectangulaires de dimensions données, et
les *K* grilles d'occupation fusionnées et la grille d'occupation globale sont chacune constituées d'une grille 2D comportant des cellules rectangulaires de mêmes dimensions données, les cellules de la grille d'occupation globale coïncidant avec les cellules des *K* grilles d'occupation fusionnées*,* et des cellules des *K* grilles d'occupation fusionnées coïncidant elles-mêmes avec des cellules des *Mₖ* grilles d'occupation telles que finalement obtenues au niveau de chacun des *K* systèmes de traitement (11, 12).

5. Procédé selon la revendication **4**, dans lequel
la première grille 2D est déterminée en déterminant les états de ses cellules, conformément aux points d9impact capturés dans l9un correspondant des *Nₖ* ensembles de données.

6. Procédé selon la revendication **5**, dans lequel
la détermination des états des cellules entraîne le marquage de celles-ci comme étant dans un état libre, un état occupé ou un état inconnu.

7. Procédé selon la revendication **4**, **5** ou **6**, dans lequel les données issues des *Mₖ* grilles d9occupation obtenues sont fusionnées (S40) par
le calcul, pour chaque cellule de chacune des *K* grilles d9occupation fusionnées, d9une valeur basée sur l9état de chacune des cellules rectangulaires de chaque grille des *Mₖ* grilles d9occupation obtenues, et
l9association de la valeur calculée à ladite cellule.

8. Procédé selon la revendication **7**, dans lequel
ladite valeur est calculée sous la forme d9un compteur, qui est incrémenté si une cellule correspondante de l9une quelconque des *Mₖ* grilles d9occupation est dans un état libre, décrémenté si une cellule correspondante de l9une quelconque des *Mₖ* grilles d9occupation est dans un état occupé, et reste inchangé si une cellule correspondante de l9une quelconque des *Mₖ* grilles d9occupation est dans un état inconnu, et,
de préférence, ledit compteur est incrémenté d9une valeur unitaire si une cellule correspondante de l9une quelconque des *Mₖ* grilles d9occupation est dans un état libre, et décrémenté d9une valeur unitaire si une cellule correspondante de l9une quelconque des *Mₖ* grilles d9occupation est dans un état occupé.

9. Procédé selon la revendication **8**, dans lequel chaque itération comprend en outre, après le fusionnement des *K* grilles d9occupation fusionnées,
l9identification (S70) des cellules de la grille d9occupation globale qui se trouvent dans l9état inconnu et l9affinement des états de ces cellules sur la base de valeurs de mémoire de cellules correspondantes, chacune reflétant l9historique d9une cellule correspondante, et
la mise à jour (S80) des valeurs de mémoire des cellules, moyennant quoi chacune de ces valeurs
est augmentée, respectivement diminuée, si la cellule correspondante est déterminée comme étant respectivement dans l9état libre ou dans l9état occupé, et
est modifiée de manière à ce que sa valeur absolue soit diminuée s9il est déterminé que la cellule correspondante est dans l9état inconnu.

10. Procédé selon l9une quelconque des revendications **1** à **9**, dans lequel ladite chaque itération comprend en outre
la mise à jour (S110) d9un état du véhicule automatisé (2) en réconciliant des états du véhicule automatisé (2) tels qu9obtenus, d9une part, à partir de la grille d9occupation globale et, d9autre part, à partir de signaux d9odométrie obtenus à partir du véhicule automatisé (2), ladite trajectoire étant ensuite déterminée conformément à l9état mis à jour du véhicule automatisé (2).

11. Procédé selon la revendication **10**, dans lequel
le procédé comprend en outre la synchronisation des *K* systèmes de traitement (11, 12) et du système de traitement supplémentaire (14) selon un protocole de réseau pour la synchronisation d9horloge.

12. Procédé selon l9une quelconque des revendications **1** à **11**, dans lequel
lesdites plusieurs itérations algorithmiques sont exécutées à une fréquence moyenne comprise entre 5 et 20 hertz, de préférence égale à 10 hertz.

13. Produit-programme d9ordinateur pour la commande d9un véhicule automatisé (2) dans une zone désignée (5), ledit produit-programme d9ordinateur comprenant un support de stockage lisible par ordinateur sur lequel sont enregistrées des instructions de programme, lesdites instructions de programme pouvant être exécutées par des moyens de traitement d9un système informatisé, qui comprend un ensemble (10) de capteurs de perception externes (110 à 140), *K* systèmes de traitement (11, 12) et un système de traitement supplémentaire (14), afin d9amener le système informatisé à exécuter plusieurs itérations algorithmiques, chacune comprenant :
l9envoi de données de capteurs vers les *K* systèmes de traitement (11, 12), moyennant quoi chaque système de traitement *k* des *K* systèmes de traitement reçoit *Nₖ* ensembles de données de capteurs telles qu9obtenues de *Nₖ* capteurs respectifs de l'ensemble (10) de capteurs de perception externes (110 3 140), où *k* = 1 à *K, K* g 2 et *Nₖ* g 2 ;
le traitement, au niveau de chaque système de traitement *k,* des *Nₖ* ensembles de données reçus afin d9obtenir *Mₖ* grilles d9occupation correspondant respectivement à des perceptions provenant de *Mₖ* capteurs respectifs des capteurs de perception externes, où *Nₖ* g *Mₖ* g 1 et où les *Mₖ* grilles d9occupation se chevauchent au moins partiellement ;
la fusion, au niveau de chaque système de traitement *k,* des données issues des *Mₖ* grilles d9occupation obtenues afin de former une grille d9occupation fusionnée, moyennant quoi *K* grilles d9occupation fusionnées sont formées par les *K* systèmes de traitement (11, 12), respectivement;
le transfert des *K* grilles d9occupation fusionnées à un système de traitement supplémentaire (14) ;
le fusionnement, au niveau du système de traitement supplémentaire (14), des *K* grilles d9occupation fusionnées afin d9obtenir une grille d9occupation globale pour la zone désignée (5); et
la détermination, sur la base de la grille d9occupation globale, d9une trajectoire pour le véhicule automatisé (2) et le transfert (S100) de la trajectoire déterminée à un système (20) de commande électronique (DbW) du véhicule automatisé (2),
dans lequel
les *Nₖ* ensembles de données reçus à chacune desdites itérations par chacun desdits systèmes de traitement *k* sont respectivement associés à *Nₖ* premiers horodatages, et
chaque itération comprend en outre :
l9attribution (S40) de *K* deuxièmes horodatages aux *K* grilles d9occupation fusionnées, chacun des *K* deuxièmes horodatages étant égal au plus ancien des *Nₖ* premiers horodatages associés aux *Nₖ* ensembles de données tels qu9ils ont été traités au niveau de chacun desdits systèmes de traitement *k* ; et
l9attribution (S60) d9un horodatage global à la grille d9occupation globale, l9horodatage global étant obtenu comme étant le plus ancien des *K* deuxièmes horodatages, et
ladite trajectoire est déterminée (S90) en fonction de l9horodatage global.

14. Système de commande d9un véhicule automatisé (2) dans une zone désignée (5), dans lequel
le système comprend un ensemble (10) de capteurs de perception externes (110 3 140), *K* systèmes de traitement (11, 12) et un système de traitement supplémentaire (14), et
le système est configuré pour exécuter plusieurs itérations algorithmiques, chaque itération desdites plusieurs itérations algorithmiques comprenant :
l9envoi de données des capteurs à *K* systèmes de traitement (11, 12), moyennant quoi chaque système de traitement *k* des *K* systèmes de traitement reçoit *Nₖ* ensembles de données de capteurs telles qu9obtenues de *Nₖ* capteurs respectifs de l'ensemble (10) de capteurs de perception externes (110 3 140), où *k* = 1 à *K, K* g 2 et *Nₖ* g 2 ;
le traitement, au niveau de chacun desdits systèmes de traitement *k,* des *Nₖ* ensembles de données reçus afin d9obtenir *Mₖ* grilles d9occupation correspondant respectivement à des perceptions provenant de *Mₖ* capteurs respectifs des capteurs de perception externes, où *Nₖ* g *Mₖ* g 1 et où les *Mₖ* grilles d9occupation se chevauchent au moins partiellement ;
la fusion, au niveau de chaque système de traitement *k,* des données issues des *Mₖ* grilles d9occupation obtenues afin de former une grille d9occupation fusionnée, moyennant quoi *K* grilles d9occupation fusionnées sont formées par les *K* systèmes de traitement (11, 12), respectivement ;
le transfert des *K* grilles d9occupation fusionnées à un système de traitement supplémentaire (14) ;
le fusionnement, au niveau du système de traitement supplémentaire (14), des *K* grilles d9occupation fusionnées afin d9obtenir une grille d9occupation globale pour la zone désignée (5) ; et
la détermination, sur la base de la grille d9occupation globale, d9une trajectoire pour le véhicule automatisé (2) et le transfert (S100) de la trajectoire déterminée à un système (20) de commande électronique (DbW) du véhicule automatisé (2),
dans lequel, en fonctionnement,
les *Nₖ* ensembles de données reçus à chacune desdites itérations par chacun desdits systèmes de traitement *k* sont respectivement associés à *Nₖ* premiers horodatages, et
chaque itération comprend en outre :
l9attribution (S40) de *K* deuxièmes horodatages aux *K* grilles d9occupation fusionnées, chacun des *K* deuxièmes horodatages étant égal au plus ancien des *Nₖ* premiers horodatages associés aux *Nₖ* ensembles de données tels qu9ils ont été traités au niveau de chacun desdits systèmes de traitement *k* ; et
l9attribution (S60) d9un horodatage global à la grille d9occupation globale, l9horodatage global étant obtenu comme étant le plus ancien des *K* deuxièmes horodatages, et
ladite trajectoire est déterminée (S90) en fonction de l9horodatage global

15. Système selon la revendication **14**, dans lequel
le système comprend deux ensembles redondants de systèmes de traitement (11, 12), chacun desdits ensembles redondants comprenant *K* systèmes de traitement, *K* étant de préférence g 4, et
le système est en outre configuré pour vérifier si les *Mₖ* grilles d9occupation obtenues par chacun des ensembles redondants concordent.
